# EUROPÄISCHE PATENTSCHRIFT

(11) **EP 3 643 217 B1**
(45) Veröffentlichungstag und Bekanntmachung des Hinweises auf die Patenterteilung: **28.07.2021**
(21) Anmeldenummer: 19200357.2
(22) Anmeldetag: 30.09.2019
(51) Int. Cl.: A47L 15/42

(54) **VERHINDERUNG DER KONDENSATION VON WASSERDAMPF AN DER AUSSENWAND EINER HAUSHALTSGESCHIRRSPÜLMASCHINE**
PREVENTING CONDENSATION OF WATER VAPOR ON AN OUTSIDE WALL OF A HOUSEHOLD DISHWASHER
PRÉVENTION DE LA CONDENSATION DE VAPEUR D'EAU SUR LE MUR EXTÉRIEUR D'UN LAVE-VAISSELLE MÉNAGER

(30) Priorität: 25.10.2018 ES 201831037
(43) Veröffentlichungstag der Anmeldung: 29.04.2020
(73) Patentinhaber: BSH Hausgeräte GmbH, 81739 München (DE)
(72) Erfinder: Arandigoyen Martínez, Naiara, 31005 Pamplona (ES); Casado Carlino, Sergio, 31621 Sarriguren (ES); Merino Alcaide, Eloy, 31621 Sarriguren (ES); Moliner Murillo, Gustavo, 31200 Estella (Navarra) (ES); Sadaba Chalezquer, Jose Maria, 31008 Pamplona (ES); Sagües García, Xabier, 31001 Pamplona (ES); Vereda Ortiz, Ciro Sebastián, 31014 Pamplona (ES); Abadia Saez, Raquel, 89537 Giengen (DE)

(56) Entgegenhaltungen:
- EP-A1- 2 471 434
- EP-A1- 2 662 013
- EP-A1- 3 170 439
- WO-A1-2017/195057

## Beschreibung

Die Erfindung betrifft eine Haushaltsgeschirrspülmaschine mit einem Aufnahmeraum zur Aufnahme von Spülgut und einer Wärmepumpenanordnung, die bei ihrem Betrieb von einem Wärmeträger durchströmt wird, wobei die Wärmepumpenanordnung zumindest einen Verdampfer zum Verdampfen des Wärmeträgers, einen Verdichter zum Verdichten des vom Verdampfer kommenden Wärmeträgers und einen Verflüssiger zum Kondensieren des vom Verdichter kommenden Wärmeträgers umfasst, wobei der Verdampfer mit einem Flüssigkeitstank der Haushaltsgeschirrspülmaschine thermisch gekoppelt, insbesondere zumindest abschnittsweise innerhalb eines Flüssigkeitstanks der Haushaltsgeschirrspülmaschine angeordnet, ist, welcher wenigstens teilweise zwischen dem Aufnahmeraum und einer die Haushaltsgeschirrspülmaschine nach außen hin begrenzenden Außenwand der Haushaltsgeschirrspülmaschine angeordnet ist.

Ferner wird ein Verfahren zum Betreiben einer Haushaltsgeschirrspülmaschine mit einem Aufnahmeraum zur Aufnahme von Spülgut und einer Wärmepumpenanordnung vorgeschlagen, wobei Wärmepumpenanordnung bei ihrem Betrieb von einem Wärmeträger durchströmt wird, und die unter anderem einen Verdampfer, einen Verdichter und einen Verflüssiger umfasst, wobei der Wärmeträger beim Betrieb der Wärmepumpenanordnung mit Hilfe des Verdampfers verdampft wird, wobei der vom Verdampfer kommende Wärmeträger mit Hilfe des Verdichters verdichtet wird, und wobei der vom Verdichter kommende Wärmeträger mit Hilfe des Verflüssigers verflüssigt wird, wobei der Verdampfer mit einem Flüssigkeitstank der Haushaltsgeschirrspülmaschine thermisch gekoppelt, insbesondere zumindest abschnittsweise innerhalb eines Flüssigkeitstanks der Haushaltsgeschirrspülmaschine angeordnet, ist, welcher wenigstens teilweise zwischen dem Aufnahmeraum und einer die Haushaltsgeschirrspülmaschine nach außen hin begrenzenden Außenwand der Haushaltsgeschirrspülmaschine angeordnet ist.

Haushaltsgeschirrspülmaschinen sind im Stand der Technik bekannt und dienen prinzipiell dem Reinigen und anschließenden Trocknen von verunreinigtem Spülgut, beispielsweise Geschirr oder Besteck. Während eines oder mehrerer Reinigungsschritte wird das Spülgut mit Spülflotte (= Wasser oder Wasser mit Reinigungs- und/oder Klarspülmittel) beaufschlagt, um Verunreinigungen vom Spülgut zu lösen. Zum Trocknen des Spülguts weisen entsprechende Haushaltsgeschirrspülmaschinen ein Trocknungssystem für das gereinigte Spülgut auf, bei welchem Luft Wassertröpfchen, die an dem gereinigten Spülgut haften, aufnimmt und somit das Spülgut getrocknet wird.

Z.B. weist die Geschirrspülmaschine der WO 2017/195057 A1 eine Wärmepumpenanordnung auf. Sie umfasst Wärmeleitabschnitte, die mit zumindest einem Teil der Verflüssigerabschnitte des Verflüssigers ihrer Wärmepumpenanordnung und mit der Außenseite zumindest einer der Wandungen, die ihren Aufnahmeraum für zu reinigendes Spülgut begrenzen, in wärmeleitendem Kontakt stehen. Ferner ist außen an einer seitlichen Wandung des Aufnahmeraums ein Wärmespeicher vorgesehen, der vorzugsweise als Wassertasche ausgebildet ist. Der Verdampfer der Wärmepumpenanordnung erstreckt sich zumindest teilweise in das Innere des Wärmespeichers.

Die Haushaltsgeschirrspülmaschine gemäß der vorliegenden Erfindung weist eine nachfolgend beschriebene Wärmepumpenanordnung zum Erwärmen von in der Haushaltsgeschirrspülmaschine zirkulierender Spülflotte auf. Die Wärmepumpenanordnung umfasst prinzipiell einen Verdampfer zum Verdampfen eines Wärmeträgers (z. B. Propan (R290)) und einen Verdichter (andere Bezeichnung: Kompressor) zum Verdichten des verdampften Wärmeträgers. Mit Hilfe des Verdichters wird der in den Verdichter beim Betrieb der Wärmepumpenanordnung eintretende gasförmige Wärmeträger komprimiert, wobei er sich erwärmt.

Ferner umfasst die Wärmepumpenanordnung einen Verflüssiger (andere Bezeichnung: Kondensor), in dem der erwärmte gasförmige Wärmeträger wieder kondensiert und hierbei Wärme abgibt, die beispielsweise für die Erwärmung von in der Haushaltsgeschirrspülmaschine vorhandener Spülflotte genutzt werden kann. Anschließend wird der verflüssigte Wärmeträger mit Hilfe eines Expansionsorgans (in der Regel eines Drosselventils oder eines Kapillarröhrchens) entspannt und gelangt schließlich wieder zurück zum Verdampfer, in dem er unter Wärmeaufnahme wieder in den gasförmigen Zustand übergeht, um dann erneut dem Verdichter zugeführt zu werden.

Der Verflüssiger und auch der Verdampfer können beispielsweise als Rohrschlange oder auch als flächig ausgebildeter Wärmetauscher (sogenannte Plattenwärmetauscher) vorliegen. In jedem Fall sind ein Einlass und ein Auslass für den Wärmeträger vorhanden. Ist der Verflüssiger bzw. der Verdampfer als Plattenwärmetauscher ausgebildet, so umfasst dieser in der Regel mehrere sandwichartig zueinander angeordnete Abschnitte in Form von zwei Freiräumen. Ein Freiraum wird beim Betrieb der Wärmepumpenanordnung vom Wärmeträger durchströmt, während der zweite Freiraum von der Spülflotte durchströmt wird. Innerhalb des Plattenwärmetauschers strömen damit die Spülflotte und der Wärmeträger in zueinander benachbarten Abschnitten der jeweiligen Freiräume, so dass ein Wärmeübergang vom Wärmeträger auf die Spülflotte erfolgt.

Vorzugsweise weist der Verdampfer gemäß vorliegender Erfindung eine Rohrschlange auf oder wird durch eine Rohrschlange gebildet, wobei der Verdampfer zumindest abschnittsweise innerhalb des Flüssigkeitstanks verläuft. Bei dem Flüssigkeitstank handelt es sich vorzugsweise um einen Tank im Bereich einer der Seitenwände der Haushaltsgeschirrspülmaschine. Der Flüssigkeitstank dient der zumindest zeitweisen Aufnahme von Flüssigkeit, vorzugsweise in Form von Frischwasser oder Spülflotte.

Da der Verdampfer insbesondere zumindest abschnittsweise innerhalb des Flüssigkeitstanks verläuft, kann beim Betrieb der Wärmepumpenanordnung Wärme von der sich im Flüssigkeitstank befindlichen Flüssigkeit auf den Verdampfer bzw. den innerhalb des Verdampfers strömenden Wärmeträger übertragen werden. In Verallgemeinerung ist der Verdampfer mit dem Flüssigkeitstank thermisch gekoppelt. Der Flüssigkeitstank dient entweder ausschließlich der Wärmeabfuhr vom Verdampfer oder zusätzlich auch als Kältequelle, die während eines Trocknungsschritts eines Spülprogramms Wärme von dem innerhalb des Aufnahmeraums vorhandenen Wasserdampf abführt und hierbei eine Kondensation des Wasserdampfs innerhalb des Aufnahmeraums bewirkt. Hierdurch wird die Trocknung des innerhalb des Aufnahmeraums vorhandenen Spülguts bewirkt bzw. beschleunigt.

In jedem Fall kühlt sich die Flüssigkeit beim Betrieb der Wärmepumpenanordnung ab, wobei die Abkühlung derart stark sein kann, dass es zu einem teilweisen Gefrieren der Flüssigkeit innerhalb des Flüssigkeitstanks kommen kann. Befindet sich nun der Flüssigkeitstank in der Nähe einer Außenwand der Haushaltsgeschirrspülmaschine, d.h. einer Wand, die mit der Umgebungsluft der Haushaltsgeschirrspülmaschine in Kontakt steht, so kann es zu einem Kondensieren von Wasserdampf aus der Luft an der entsprechenden Außenseite der Außenwand kommen. Dies ist sowohl aus ästhetischen als auch hygienischen Gründen unerwünscht. Zudem könnten benachbarte Küchenmöbelteile durch das Kondensat oder der Fußboden am Aufstellort der Haushaltsgeschirrspülmaschine beschädigt oder in sonstiger Weise beeinträchtigt werden.

Aufgabe der vorliegenden Erfindung ist es, den bekannten Stand der Technik weiterzubilden.

Die Aufgabe wird gelöst durch eine Haushaltsgeschirrspülmaschine sowie ein Verfahren zum Betreiben einer solchen mit den Merkmalen der unabhängigen Patentansprüche.

Erfindungsgemäß ist vorgesehen, dass die Haushaltsgeschirrspülmaschine wenigstens ein Mittel aufweist, mit dessen Hilfe die genannte Außenwand zumindest abschnittsweise erwärmbar ist, um einer Kondensation von Wasserdampf auf der dem Aufnahmeraum abgewandten Außenseite der Außenwand entgegenzuwirken und/oder auf der Außenseite vorhandenes Kondenswasser zu verdampfen. Das Mittel dient also dazu, zu verhindern, dass Feuchtigkeit aus der Luft an der genannten Außenseite der Außenwand kondensiert. Zusätzlich oder alternativ kann das Mittel auch ausgebildet sein, Wasser, das sich durch Kondensation von Luftfeuchtigkeit an der Außenseite gebildet hat, wieder zu verdampfen, um hierdurch die Außenwand zu trocknen. Dadurch sind Nässeschäden und/oder sonstige Beeinträchtigungen in der Umgebung der erfindungsgemäßen Haushaltsgeschirrspülmaschine wie z.B. an Küchenmöbelteilen, die der erfindungsgemäßen Haushaltsgeschirrspülmaschine unmittelbar benachbart sind, und/oder am Fußbodenbelag des Aufstellorts der erfindungsgemäßen Haushaltsgeschirrspülmaschine weitgehend vermieden. Insbesondere sind unansehnliche Kondensatspuren auf dem Fußboden weitgehend vermieden, auf dem die erfindungsgemäße Haushaltsgeschirrspülmaschine steht.

Wie die nachfolgende Beschreibung zeigt, kann das Mittel unterschiedlich ausgebildet sein.

Gemäß einer vorteilhaften Ausführung ist vorgesehen, dass das Mittel einen Lüfter (Ventilator oder Gebläse) umfasst, mit dessen Hilfe Luft zum Verflüssiger und/oder Verdichter und von dort durch einen zwischen der genannten Außenwand und dem Flüssigkeitstank vorhandenen Hohlraum und/oder in den Bereich der genannten Außenseite der Außenwand förderbar ist. Der Lüfter ist vorzugsweise unterhalb des Hohlraums angeordnet und befördert Luft vom Verflüssiger und/oder vom Verdichter in den Hohlraum und durch diesen hindurch. Hierdurch wird die an den Hohlraum angrenzende Außenwand der Haushaltsgeschirrspülmaschine erwärmt, so dass eine Kondensation von Luftfeuchtigkeit an deren Außenseite vermieden oder zumindest minimiert wird. Der Lüfter steht vorzugsweise mit einer Steuer- und/oder Regelungseinrichtung in Verbindung, die ausgebildet ist, die Drehzahl des Lüfters in Abhängigkeit eines in der Steuer- und/oder Regelungseinrichtung hinterlegten Spülprogramms zu regulieren bzw. den Lüfter ein- und auszuschalten.

Nach einer vorteilhaften Weiterbildung ist vorgesehen, dass der Hohlraum durch einen Spalt zwischen dem Flüssigkeitstank und der genannten Außenwand gebildet ist. Insbesondere ist es von Vorteil, wenn die Außenwand durch den Spalt vollständig von dem Flüssigkeitstank beabstandet ist. Der Spalt hat vorzugsweise eine horizontal verlaufende Breite zwischen 3 mm und 2 cm. Die Tiefe und Höhe des Spalts beträgt vorzugsweise zwischen 30 cm und 80 cm. Vorzugsweise wird durch den Spalt eine vertikal verlaufende Ebene definiert, die parallel zu den Ebenen verläuft, in denen sich die Außenwand und der Flüssigkeitstank befinden. Insbesondere sollte der Spalt eine Öffnung aufweisen, über die Luft mit Hilfe des Lüfters in den Spalt eingebracht werden kann. Ebenso sollte eine weitere Öffnung vorhanden sein, über die die Luft wieder aus dem Spalt entweichen kann. Die beiden Öffnungen befinden sich vorzugsweise auf unterschiedlichen Seiten des Spalts.

Gemäß einer vorteilhaften Weiterbildung ist vorgesehen, dass die Haushaltsgeschirrspülmaschine eine Steuer- und/oder Regeleinrichtung aufweist, die ausgebildet ist, die Drehzahl des Lüfters auf Basis von Messwerten einer Sensoranordnung der Haushaltsgeschirrspülmaschine und/oder basierend auf Vorgaben eines Spülprogramms zu regulieren. Beispielsweise wäre es denkbar, die Drehzahl des Lüfters zu erhöhen bzw. den Lüfter zu aktivieren, wenn die Wärmepumpenanordnung betrieben wird, da in diesem Fall auch Wärme vom Verdichter oder Verflüssiger auf die von dem Lüfter geförderte Luft übertragen werden kann.

Die Sensoranordnung kann beispielsweise einen Temperatursensor umfassen, der die Temperatur der Außenwand, insbesondere deren Außenseite überwacht. Fällt diese Temperatur unter einen definierten Wert, so ist es sinnvoll, den Lüfter zu aktivieren bzw. dessen Drehzahl zu erhöhen, da in diesem Fall eine Kondensation von Luftfeuchtigkeit an der Außenseite der Außenwand droht.

Zusätzlich oder alternativ kann die Sensoranordnung auch einen Feuchtigkeitssensor umfassen, mit dessen Hilfe die Luftfeuchtigkeit im Bereich der Außenseite der Außenwand überwachbar ist. In diesem Fall ist es von Vorteil, wenn der Lüfter aktiviert oder dessen Drehzahl erhöht wird, wenn die Luftfeuchtigkeit im Bereich der Außenseite über einen definierten Wert steigt.

Zusätzlich oder alternativ kann die Sensoranordnung auch einen Flüssigkeitssensor umfassen, mit dessen Hilfe überwachbar ist, ob sich an der Außenseite der Außenwand Flüssigkeit in Form von kondensierter Luftfeuchtigkeit niederschlägt. Wird vom Flüssigkeitssensor im Bereich der Außenseite der entsprechenden Außenwand eine Flüssigkeit detektiert, so sollte der Lüfter aktiviert bzw. dessen Drehzahl erhöht werden.

Ein weiterer Vorteil in der Verwendung eines Lüfters, mit dessen Hilfe Luft am Verdichter vorbeigeführt und diesen hierdurch kühlt, liegt darin, dass die Effektivität des Verdichters gegenüber einer im Stand der Technik bekannten Lösung ohne Lüfter verbessert wird.

Ferner sei darauf hingewiesen, dass der Lüfter auch derart platziert sein kann, dass er die Luft an der Außenseite der genannten Außenwand der Haushaltsgeschirrspülmaschine vorbeiführt, so dass die Außenseite direkt erwärmt wird.

Nach einer vorteilhaften Ausführung ist vorgesehen, dass das Mittel ein Heizelement umfasst, welches derart im Bereich der genannten Außenwand angeordnet ist, dass die Außenwand mit Hilfe des Heizelements erwärmbar ist. Vorzugsweise handelt es sich bei dem Heizelement um ein flach ausgebildetes elektrisches Heizelement, beispielsweise eine Heizmatte, welches an einer Innenseite der entsprechenden Außenwand angeordnet sein kann. Insbesondere sollte das Heizelement ein oder mehrere Heizdrähte umfassen, die sich erwärmen, wenn diese mit einer Spannungsquelle verbunden werden.

Gemäß einer vorteilhaften Weiterbildung ist vorgesehen, dass das Heizelement zwischen dem Flüssigkeitstank und der genannten Außenwand angeordnet ist. Das Heizelement bewirkt in diesem Fall eine Erwärmung der Außenwand durch direkten Kontakt bzw. durch Strahlungswärme. Gleichzeitig wird ein Wärmeübergang von der Außenwand auf den Flüssigkeitstank verhindert, so dass einer Kondensation von Luftfeuchtigkeit an der Außenseite der Außenwand effektiv entgegengewirkt werden kann. Wird die Heizleistung des Heizelements entsprechend gewählt, so ist dieses auch geeignet, auf der Außenseite vorhandene Flüssigkeit, die sich durch Kondensation von Luftfeuchtigkeit gebildet hat, wieder zu verdampfen und die Außenseite dadurch zu trocknen.

Nach einer vorteilhaften Weiterbildung ist vorgesehen, dass die Haushaltsgeschirrspülmaschine eine Steuer- und/oder Regeleinrichtung aufweist, die ausgebildet ist, die Heizleistung des Heizelements auf Basis von Messwerten einer Sensoranordnung der Haushaltsgeschirrspülmaschine und/oder basierend auf Vorgaben eines Spülprogramms zu regulieren. Hinsichtlich der möglichen Ausgestaltung der Sensoranordnung wird auf die obige bzw. nachfolgende Beschreibung verwiesen. Die Steuer- und/oder Regeleinrichtung ist also ausgebildet, die Heizleistung des Heizelements zu erhöhen bzw. das Heizelement zu aktivieren, wenn die Messwerte der Sensoranordnung darauf hindeuten, dass es zu einer Kondensation von Luftfeuchtigkeit an der Außenseite der entsprechenden Außenwand gekommen ist, oder dass eine solche Kondensation in Kürze droht. Mit anderen Worten wird das Heizelement also vorzugsweise nicht während des gesamten Ablaufs eines Spülprogramms betrieben. Vielmehr kann mit Hilfe der Steuer- und/oder Regeleinrichtung die Zeit, während derer das Heizelement betrieben wird, auf Basis der Messwerte der Sensoranordnung minimiert werden, so dass der Stromverbrauch des Heizelements möglichst gering ausfällt.

Gemäß einer vorteilhaften Weiterbildung ist vorgesehen, dass zwischen dem Flüssigkeitstank und der genannten Außenwand ein, vorzugsweise parallel zum Heizelement verlaufender, Spalt angeordnet ist. Der Spalt bewirkt insbesondere eine gewisse thermische Isolation des Flüssigkeitstanks. Hierdurch wird verhindert, dass die sich im Flüssigkeitstank befindliche Flüssigkeit mit Hilfe des Heizelements übermäßig erwärmt wird. Dies hat die Vorteile, dass der Flüssigkeitstank als Kältequelle während eines Trocknungsschritts eines Spülprogramms dienen kann (siehe oben) und dass die in dem Heizelement verwendete Energie so weit wie möglich zum Heizen der Außenwand der Haushaltsgeschirrspülmaschineverwendet wird. Vorzugsweise steht das Heizelement an keiner Stelle mit dem Flüssigkeitstank in direktem Kontakt. Zusätzlich oder alternativ ist es denkbar, dass zwischen dem Flüssigkeitstank und der Außenwand eine, vorzugsweise parallel zum Heizelement verlaufende, Isolationsschicht angeordnet ist. Die Isolationsschicht wird vorzugsweise durch eine flach ausgebildete Isolationsmatte gebildet, die insbesondere direkt an der Außenseite des Flüssigkeitstanks anliegen sollte. Das Heizelement ist vorzugsweise durch den genannten Spalt von der Isolationsschicht getrennt. Ebenso ist es denkbar, dass das Heizelement an der dem Flüssigkeitstank abgewandten Seite der Isolationsschicht angeordnet und vorzugsweise durch den genannten Spalt von der Außenwand beabstandet ist.

Nach einer vorteilhaften Ausführung ist vorgesehen, dass das Mittel einen beim Betrieb der Wärmepumpenanordnung vom Wärmeträger durchströmten Wärmetauscher umfasst, wobei der Wärmetauscher in Strömungsrichtung des Wärmeträgers gesehen zwischen dem Verdichter und einem Expansionsorgan der Wärmepumpenanordnung angeordnet ist, so dass der vom Verdichter kommende Wärmeträger beim Betrieb der Wärmepumpenanordnung durch den Wärmetauscher strömt, bevor er zum Expansionsorgan gelangt. Der Wärmeträger besitzt in diesem Bereich noch eine Temperatur, die ausreicht, eine Kondensation von Luftfeuchtigkeit in der Nähe des Wärmetauschers zu verhindern bzw. kondensierte Luftfeuchtigkeit wieder zu verdampfen. Der Wärmetauscher wirkt also als weiterer Verflüssiger und gibt beim Betrieb der Wärmepumpenanordnung Wärme an die Umgebung ab. Vorzugsweise ist der entsprechende Wärmetauscher im Bereich einer oder mehrerer Außenwände der Haushaltsgeschirrspülmaschine angeordnet. Vorzugsweise steht er in direktem Kontakt mit einer Innenseite der entsprechenden Außenwand. Insbesondere ist es von Vorteil, wenn der Wärmetauscher als Rohrschlange ausgebildet ist, die zumindest abschnittsweise zwischen dem Flüssigkeitstank und der benachbart zum Flüssigkeitstank verlaufenden Außenwand der Haushaltsgeschirrspülmaschine verläuft.

Nach einer vorteilhaften Weiterbildung ist vorgesehen, dass der Wärmetauscher mit einer Innenseite der genannten Außenwand direkt in Kontakt steht. Wird der Wärmetauscher vom Wärmeträger durchströmt, so gibt dieser Wärme an die Außenwand ab und verhindert hierdurch eine Kondensation von Luftfeuchtigkeit im Bereich der Außenseite der Außenwand oder bewirkt ein Verdampfen von dort kondensierter Feuchtigkeit. Insbesondere ist es von Vorteil, wenn der Wärmetauscher über einen Wärmeleiter, vorzugsweise einen flächigen Metallabschnitt, mit der Innenseite der entsprechenden Außenwand in Verbindung steht. Bei dem Wärmeleiter handelt es sich vorzugsweise um eine dünne Metallplatte, die direkt mit der genannten Innenseite einerseits und dem Wärmetauscher andererseits verbunden ist. Ebenso ist es denkbar, dass der Wärmetauscher als Plattenwärmetauscher ausgebildet ist, der mit der entsprechenden Innenseite der Außenwand in Kontakt steht.

Generell kann der Wärmetauscher als Plattenwärmetauscher ausgebildet sein, wobei in diesem Zusammenhang auf den Anfang der obigen Beschreibung verwiesen wird.

Gemäß einer vorteilhaften Weiterbildung ist vorgesehen, dass der Wärmetauscher mit dem Verflüssiger strömungstechnisch in Reihe geschaltet ist, so dass der Massenstrom des Wärmeträgers innerhalb der gesamten Wärmepumpenanordnung stets konstant ist. Der Wärmeträger durchströmt in diesem Fall ausgehend vom Verdichter zunächst den eigentlichen Verflüssiger der Wärmepumpenanordnung, mit dessen Hilfe beim Betrieb der Wärmepumpenanordnung die Spülflotte erwärmt wird. Nach Passieren dieses Verflüssigers durchströmt der Wärmeträger schließlich den genannten Wärmetauscher und gibt hierbei weitere Wärme, diesmal an die entsprechend benachbarte Außenwand der Haushaltsgeschirrspülmaschine, ab. Der Wärmetauscher bewirkt damit eine Unterkühlung des Wärmeträgers und damit eine Effizienzsteigerung der Wärmepumpenanordnung.

Ebenso ist es denkbar, dass der Wärmetauscher mit dem Verflüssiger strömungstechnisch parallel geschaltet ist. In diesem Fall teilt sich die vom Verdichter kommende Wärmeträgerleitung in zwei Abschnitte auf, wobei ein erster Abschnitt zum Verflüssiger der Wärmepumpenanordnung und ein zweiter Abschnitt zum genannten Wärmetauscher verlaufen. Ein Teil des Wärmeträgers wird also dem Verflüssiger und der restliche Teil dem Wärmetauscher zugeführt, wenn die Wärmepumpenanordnung betrieben wird. Das Verhältnis der beiden Volumenströme kann vorzugsweise durch ein Ventil reguliert werden, das in die vom Verdichter kommende Wärmeträgerleitung integriert ist. Vorzugsweise ist das Ventil ausgebildet, jeweils einen der genannten Abschnitte komplett zu verschließen. Hierdurch ist es möglich, dass der gesamte Wärmeträger dem Verflüssiger zugeführt wird, wenn eine schnelle Erwärmung der Spülflotte erwünscht ist. Ebenso kann der gesamte Wärmeträger dem Wärmetauscher zugeführt werden, wenn die oben beschriebene Sensoranordnung Messwerte liefert, die auf eine drohende Kondensation von Luftfeuchtigkeit an der Außenseite einer oder mehrerer Außenwände hinweist oder das Vorhandensein von Kondensat an einer der genannten Außenseiten anzeigt.

Gemäß einer vorteilhaften Weiterbildung ist vorgesehen, dass zwischen dem Flüssigkeitstank und dem Wärmetauscher und/oder zwischen der Außenwand der Haushaltsgeschirrspülmaschine und dem Wärmetauscher eine Isolationsschicht angeordnet ist. Die Isolationsschicht verhindert, dass die auf der dem Wärmetauscher abgewandten Seite der Isolationsschicht angeordneten Bauteile übermäßig erwärmt werden. Während im erstgenannten Fall eine Erwärmung der Flüssigkeit im Flüssigkeitstank verhindert wird, wirkt die Isolationsschicht im zweiten Fall einer übermäßigen Erhitzung der Außenwand entgegen.

Nach einer vorteilhaften Weiterbildung ist vorgesehen, dass die Sensoranordnung im Bereich der genannten Außenseite der Außenwand angeordnet ist und einen Temperatursensor zur Überwachung der Temperatur der Außenseite und/oder der Luft im Bereich der Außenseite und/oder einen Feuchtigkeitssensor zur Überwachung der relativen und/oder absoluten Feuchtigkeit im Bereich der Außenseite und/oder einen Flüssigkeitssensor zur Detektion von Flüssigkeit auf der Außenwand umfasst. Hinsichtlich der Vorteile der einzelnen Sensoren wird auf die obige Beschreibung verwiesen. Selbstverständlich können ein oder auch mehrere der genannten Sensoren zum Einsatz kommen.

Das erfindungsgemäße Verfahren zeichnet sich schließlich dadurch aus, dass eine oder mehrere Außenwände einer Haushaltsgeschirrspülmaschine während eines Spülprogramms zumindest abschnittsweise und wenigstens zeitweise erwärmt werden, um einer Kondensation von Wasserdampf auf einer dem Aufnahmeraum abgewandten Außenseite der entsprechenden Außenwand entgegenzuwirken und/oder auf der Außenseite vorhandenes Kondenswasser zu verdampfen.

Insbesondere ist es vorteilhaft, wenn die entsprechende Außenseite auf eine Temperatur erwärmt wird, deren Betrag zwischen 30 °C und 60 °C liegt.

Die jeweilige Außenwand wird hierbei vorzugsweise nur während eines oder mehrerer Abschnitte eines Spülprogramms erwärmt. Insbesondere sollte die Erwärmung zumindest dann erfolgen, wenn die Wärmepumpenanordnung betrieben wird und/oder wenn die oben genannte Sensoranordnung Messwerte liefert, der auf eine drohende oder bereits erfolgte Kondensation von Luftfeuchtigkeit im Bereich der Außenseite der entsprechenden Außenwand hinweist.

Ebenso kann es von Vorteil sein, wenn die Haushaltsgeschirrspülmaschine eine Steuer- und/oder Regeleinrichtung aufweist, in der ein oder mehrere Spülprogramme hinterlegt sind. Das Spülprogramm kann wiederum einen oder mehrere Abschnitte umfassen, während derer die jeweilige Außenwand erwärmt wird.

Gemäß einer vorteilhaften Weiterbildung ist vorgesehen, dass die genannte Außenwand mit Hilfe eines Lüfters, eines elektrischen Heizelements und/oder eines Wärmetauschers erwärmt wird, durch den während des Betriebs der Wärmepumpenanordnung der Wärmeträger strömt. Hinsichtlich vorteilhafter Weiterbildungen der einzelnen Bauteile wird auf die obige bzw. nachfolgende Beschreibung verwiesen.

Sonstige Weiterbildungen der Erfindung sind in den Unteransprüchen wiedergegeben.

Die vorstehend erläuterten und/oder in den Unteransprüchen wiedergegebenen vorteilhaften Aus- und Weiterbildungen der Erfindung können dabei - außer z. B. in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Ausführungsbeispiele darstellenden Zeichnungen näher erläutert. Es zeigen, jeweils in einer schematischen Prinzipskizze:
- **Figur 1**: ausgewählte Abschnitte einer Haushaltsgeschirrspülmaschine,
- **Figur 2**: ausgewählte Abschnitte einer ersten vorteilhaften Ausführungsform einer erfindungsgemäß ausgebildeten Haushaltsgeschirrspülmaschine,
- **Figur 3**: eine Draufsicht auf die Innenseite einer Außenwand einer zweiten vorteilhaften Ausführungsform einer erfindungsgemäßen Haushaltsgeschirrspülmaschine (Figur 3a) sowie einen Querschnitt eines Ausschnitts einer entsprechenden Haushaltsgeschirrspülmaschine (Figur 3b),
- **Figur 4**: Ausschnitte dreier weiterer vorteilhafter Ausführungsformen einer erfindungsgemäßen Haushaltsgeschirrspülmaschine,
- **Figur 5**: eine Draufsicht auf die Innenseite einer Außenwand einer weiteren vorteilhaften Ausführungsform einer erfindungsgemäßen Haushaltsgeschirrspülmaschine (Figur 5a) sowie einen Querschnitt eines Ausschnitts einer entsprechenden Haushaltsgeschirrspülmaschine (Figur 5b),
- **Figur 6**: Ausschnitte dreier weiterer vorteilhafter Ausführungsformen einer erfindungsgemäßen Haushaltsgeschirrspülmaschine, und
- **Figur 7**: zwei mögliche gegenseitige Anordnungen der Hauptkomponenten einer Wärmepumpenanordnung einer erfindungsgemäßen Haushaltsgesch irrspülmaschine.

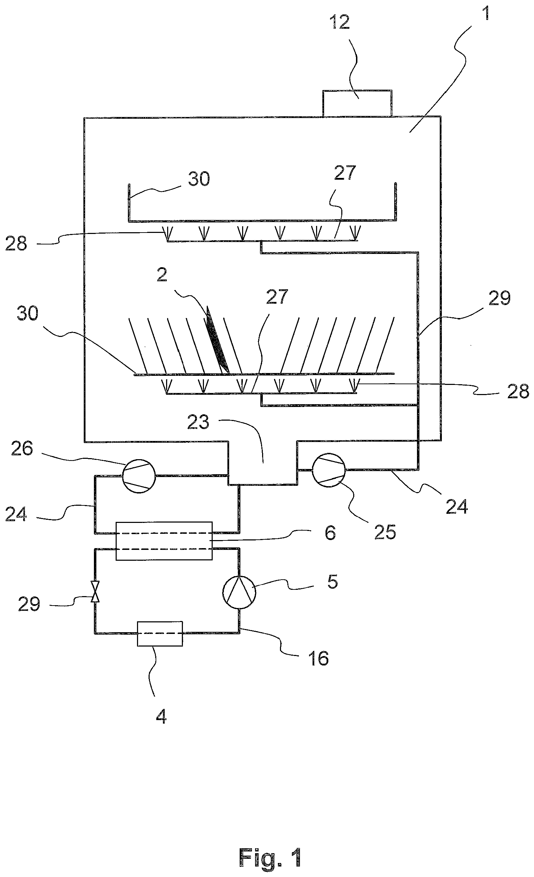

Figur 1 zeigt ausgewählte Abschnitte einer Haushaltsgeschirrspülmaschine. Hierbei sind nur diejenigen Bestandteile der Haushaltsgeschirrspülmaschine gezeigt, mit Bezugszeichen versehen und erläutert, welche für das Verständnis der Erfindung erforderlich sind. Es versteht sich von selbst, dass die erfindungsgemäße Haushaltsgeschirrspülmaschine weitere Teile und Baugruppen umfassen kann.

Wie Figur 1 zu entnehmen ist, umfasst die Haushaltsgeschirrspülmaschine einen Aufnahmeraum 1 für zu reinigendes Spülgut 2 (z.B. Geschirr) sowie einen oder mehrere Geschirrkörbe 30 zur Aufnahme des Spülguts 2. Ferner ist eine Umwälzpumpe 25 vorgesehen, mit deren Hilfe Spülflotte 28 innerhalb der Haushaltsgeschirrspülmaschine zirkuliert werden kann. Die Spülflotte 28 wird während eines Spülprogramms mit Hilfe der Umwälzpumpe 25 von einem Pumpensumpf 23 im unteren Teil der Haushaltsgeschirrspülmaschine in Richtung eines oder mehrerer Sprüharme 27 und/oder sonstiges Sprüheinrichtungen gepumpt und gelangt von dort auf das zu reinigende Spülgut 2.

Um die Spülflotte 28 während des Spülprogramms bzw. ausgewählter Abschnitte desselben erwärmen zu können, umfasst die Haushaltsgeschirrspülmaschine eine Wärmepumpenanordnung. Diese ist in Figur 1 unterhalb des Aufnahmeraums 1 gezeigt. Diese Anordnung ist nur exemplarisch zu verstehen. Selbstverständlich können die im Folgenden noch näher erläuterten Elemente der Wärmepumpenanordnung auch an anderer Stelle der Haushaltsgeschirrspülmaschine angeordnet sein.

Die Wärmepumpenanordnung umfasst prinzipiell einen Verdampfer 4 zum Verdampfen eines Wärmeträgers 3 (z. B. Propan (R290)) und einen Verdichter 5 (andere Bezeichnung: Kompressor) zum Verdichten des verdampften Wärmeträgers 3. Mit Hilfe des Verdichters 5 wird der in den Verdichter 5 beim Betrieb der Wärmepumpenanordnung eintretende gasförmige Wärmeträger 3 komprimiert, wobei er sich erwärmt.

Ferner umfasst die Wärmepumpenanordnung einen Verflüssiger 6 (andere Bezeichnung: Kondensor), in dem der erwärmte gasförmige Wärmeträger 3 wieder kondensiert und hierbei Wärme abgibt, die beispielsweise für die Erwärmung von in der Haushaltsgeschirrspülmaschine vorhandener Spülflotte 28 genutzt werden kann. Anschließend wird der verflüssigte Wärmeträger 3 mit Hilfe eines Expansionsorgans 29 (in der Regel eines Drosselventils oder eines Kapillarröhrchens) entspannt und gelangt schließlich wieder zurück zum Verdampfer 4, in dem er unter Wärmeaufnahme (beispielsweise aus der Umgebung der Haushaltsgeschirrspülmaschine und/oder dem nachfolgend beschriebenen Flüssigkeitstank 7) wieder in den gasförmigen Zustand übergeht, um dann erneut dem Verdichter 5 zugeführt zu werden. Im Übrigen sind eine oder mehrere Wärmeträgerleitungen vorhanden, über die der Wärmeträger 3 innerhalb der Wärmepumpenanordnung zirkuliert.

Wird nun die Wärmepumpenanordnung während eines Spülprogramms betrieben, so wird im Verflüssiger 6 Wärme vom Wärmeträger 3 auf die durch den Verflüssiger 6 strömende Spülflotte 28 übertragen wobei der Wärmeträger 3 und die Spülflotte 28 selbstverständlich durch entsprechende Trennwände voneinander separiert sind. Vorzugsweise umfasst die Haushaltsgeschirrspülmaschine eine Spülflottenpumpe 26, mit deren Hilfe die Spülflotte 28 durch eine Spülflottenleitung 24 vom Pumpensumpf 23 zum Verflüssiger 6 und wieder zurück in den Aufnahmeraum 1 gepumpt werden kann.

Schließlich ist eine Steuer- und/oder Regeleinrichtung 12 vorhanden, mit deren Hilfe die Spülflottenpumpe 26, die Umwälzpumpe 25 und auch die Wärmepumpenanordnung gesteuert und/oder geregelt werden.

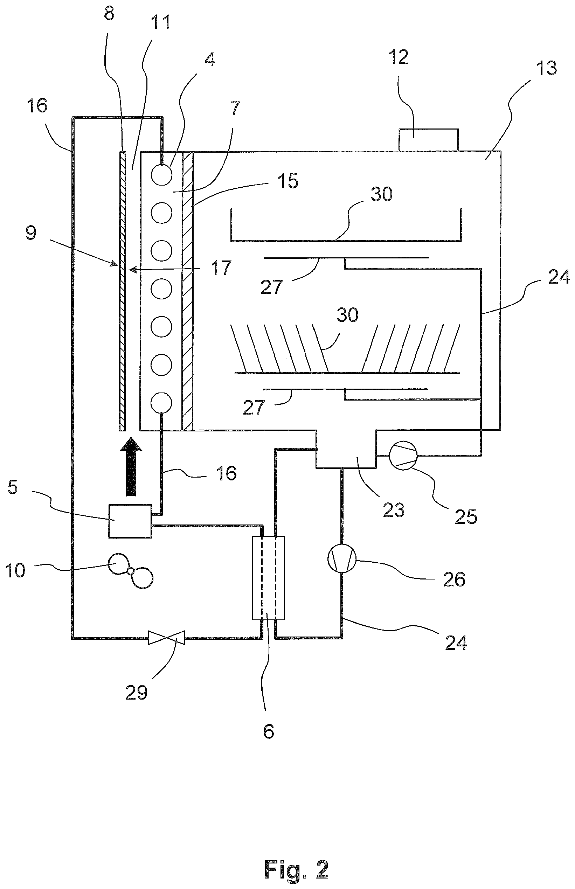

Wie nun Figur 2 zu entnehmen ist, umfasst die erfindungsgemäße Haushaltsgeschirrspülmaschine den oben bereits erwähnten Flüssigkeitstank 7, wobei dieser vorzugsweise im Bereich einer die Haushaltsgeschirrspülmaschine nach außen hin begrenzenden Außenwand 8 angeordnet ist. Selbstverständlich können auch mehrere Flüssigkeitstanks 7 vorhanden sein. Beispielsweise wäre es denkbar, einen weiteren Flüssigkeitstank 7 auf der, bezogen auf Figur 2, rechts angeordneten Seite der Haushaltsgeschirrspülmaschine anzuordnen.

Der Flüssigkeitstank 7 dient der Aufnahme einer Flüssigkeit, vorzugsweise in Form von Frischwasser 31 aus einer nicht gezeigten Frischwasserleitung und/oder in Form von Spülflotte 28, die beispielsweise aus den Pumpensumpf 23 in den Flüssigkeitstank 7 gepumpt werden kann. Der Flüssigkeitstank 7 umfasst vorzugsweise einen Einlauf und einen Auslauf für die Flüssigkeit, die jedoch in Figur 2 aus Übersichtsgründen nicht dargestellt sind. Insbesondere ist es von Vorteil, wenn innerhalb des Flüssigkeitstanks 7 der Verdampfer 4 bzw. zumindest ein Abschnitt des Verdampfers 4 verläuft, so dass beim Betrieb der Wärmepumpenanordnung Wärme von der Flüssigkeit innerhalb des Flüssigkeitstanks 7 auf den Wärmeträger 3 übertragen werden kann. In Verallgemeinerung steht der Verdampfer mit dem Flüssigkeitstank in thermischer Verbindung.

Wird nun die Wärmepumpenanordnung während eines Spülprogramms betrieben, kühlt sich die Flüssigkeit innerhalb des Flüssigkeitstanks 7 ab, wobei die Abkühlung derart stark sein kann, dass ein Teil der Flüssigkeit gefriert. Befindet sich nun der Flüssigkeitstank 7, wie in Figur 2 gezeigt, in unmittelbarer Nähe einer Außenwand 8, so kühlt sich auch diese ab. Dies hat wiederum die negative Folge, dass es im Bereich der Außenseite 9 der entsprechenden Außenwand 8 zu einer Kondensation von Luftfeuchtigkeit kommen kann. Dies ist jedoch aus hygienischer und auch ästhetischer Sicht unerwünscht. Insbesondere könnten Küchenmöbel, die seitlich der z.B. in einer Einbaunische untergebrachten Haushaltsgeschirrspülmaschine benachbart sind, durch Kondensat beschädigt werden.

Gemäß vorliegender Erfindung wird daher vorgeschlagen, dass die entsprechende Außenwand 8 während und/oder nach dem Betrieb der Wärmepumpenanordnung erwärmt wird.

Eine erste vorteilhafte Möglichkeit, wie eine derartige Erwärmung erfolgen kann, ist in Figur 2 gezeigt. Wie dieser Figur zu entnehmen ist, ist es von Vorteil, wenn zwischen dem Flüssigkeitstank 7 und der hierzu benachbarten Außenwand 8 ein Hohlraum in Form eines Spalts 11 vorhanden ist. Ferner ist ein Lüfter 10 vorgesehen, mit dessen Hilfe vorzugsweise Umgebungsluft durch den Spalt 11 bewegt werden kann. Die Luft wird vorzugsweise vor dem Einbringen in den Spalt 11 erwärmt, wobei die Erwärmung dadurch erfolgen kann, dass die Luft mit Hilfe des Lüfters 10 am Verdichter 5 und/oder am Verflüssiger 6 vorbeigeführt wird und hierbei Wärme aufnimmt.

Gelangt nun die erwärmte Luft in den Spalt 11, so gibt sie Wärme auf die den Spalt 11 begrenzende Außenwand 8 ab, so dass sich diese erwärmt. Hierdurch wird einer Kondensatbildung an der Außenseite 9 der entsprechenden Außenwand 8 effektiv entgegengewirkt bzw. an der Außenseite 9 bereits kondensiertes Wasser wieder verdampft.

Vorzugsweise sind sowohl der Lüfter 10 als auch der Verdichter 5 und/oder Verflüssiger 6 unterhalb des Spalts 11 angeordnet, so dass die erwärmte Luft nach oben steigen kann. Der Spalt 11 sollte insbesondere im oberen Bereich eine Öffnung aufweisen, über die die Luft wieder aus der Haushaltsgeschirrspülmaschine in die Umgebung austreten kann.

Vorzugsweise kommt ein Lüfter 10 mit variabler Drehzahl zum Einsatz, wobei die Drehzahl mit Hilfe der Steuer- und/oder Regeleinrichtung 12 im Verlauf eines Spülprogramms geregelt und vorzugsweise auch auf Null reduziert werden kann.

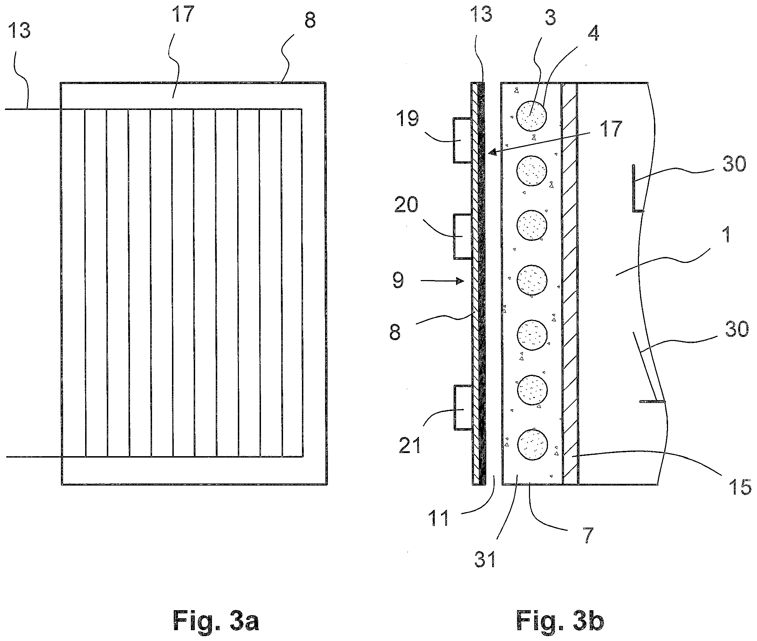

Eine weitere zweckmäßige Möglichkeit, mit deren Hilfe eine oder mehrere Außenwände 8 der Haushaltsgeschirrspülmaschine erwärmt werden können, ist den Figuren 3a und 3b zu entnehmen. Figur 3a zeigt eine Draufsicht auf die Innenseite 17 einer Außenwand 8 einer Haushaltsgeschirrspülmaschine, wobei die Innenseite 17 mit einem elektrischen Heizelement 13 versehen ist. Wird das Heizelement 13 aktiviert, so erwärmt es sich und erwärmt damit auch die entsprechende Außenwand 8.

Wie Figur 3b zu entnehmen ist, kann das Heizelement 13 hierbei direkt an der Innenseite 17 der entsprechenden Außenwand 8 angeordnet sein. Zudem kann zwischen dem Heizelement 13 und dem Flüssigkeitstank 7 ein Spalt 11 vorhanden sein, so dass die vom Heizelement 13 erzeugte Wärme nicht direkt auf die im Flüssigkeitstank 7 vorhandene Flüssigkeit übertragen wird.

Des Weiteren ist Figur 3b zu entnehmen, dass die Haushaltsgeschirrspülmaschine einen Temperatursensor 19, einen Feuchtigkeitssensor 20, und/oder einen Flüssigkeitssensor 21 gemäß obiger Beschreibung umfassen kann. Die jeweiligen Sensoren, 19, 20, 21 können, wie in Figur 3b gezeigt, auf der Außenseite 9 einer Außenwand 8 angeordnet sein. Selbstverständlich kann insbesondere der Temperatursensor 19 auch innerhalb der Haushaltsgeschirrspülmaschine angeordnet sein. Vorzugsweise ist er derart angeordnet, dass er die Temperatur einer oder mehrerer Außenwände 8 der Haushaltsgeschirrspülmaschine überwachen kann.

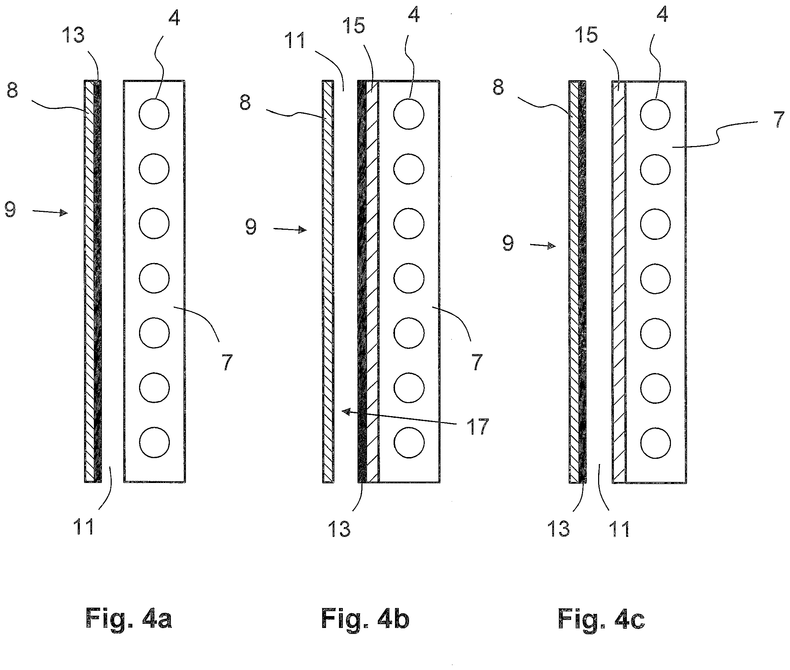

Die Figuren 4a bis 4c zeigen mögliche vorteilhafte Anordnungen des Heizelements 13.

Das Heizelement 13 kann, wie in Figur 4a gezeigt, direkt mit der Innenseite 17 einer Außenwand 8 verbunden sein. Vorzugsweise ist zwischen dem Heizelement 13 und dem Flüssigkeitstank 7 ein Spalt 11 vorhanden. Ebenso ist es denkbar, dass das Heizelement 13 auf einer dem Flüssigkeitstank 7 abgewandten Seite einer Isolationsschicht 15 angeordnet ist, wobei die Isolationsschicht 15 vorzugsweise direkt mit dem Flüssigkeitstank 7 verbunden sein kann (Figur 4b).

Wie schließlich Figur 4c zu entnehmen ist, ist es ebenso denkbar, dass die Isolationsschicht 15 und das Heizelement 13 durch einen Spalt 11 voneinander getrennt sind, wobei das Heizelement 13 mit der Außenwand 8 und die Isolationsschicht 15 mit dem Flüssigkeitstank 7 in direktem Kontakt stehen können.

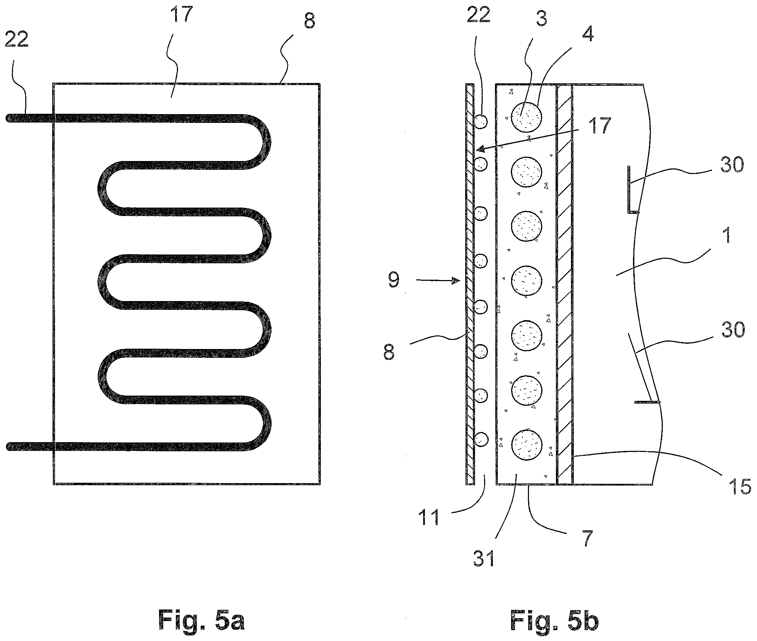

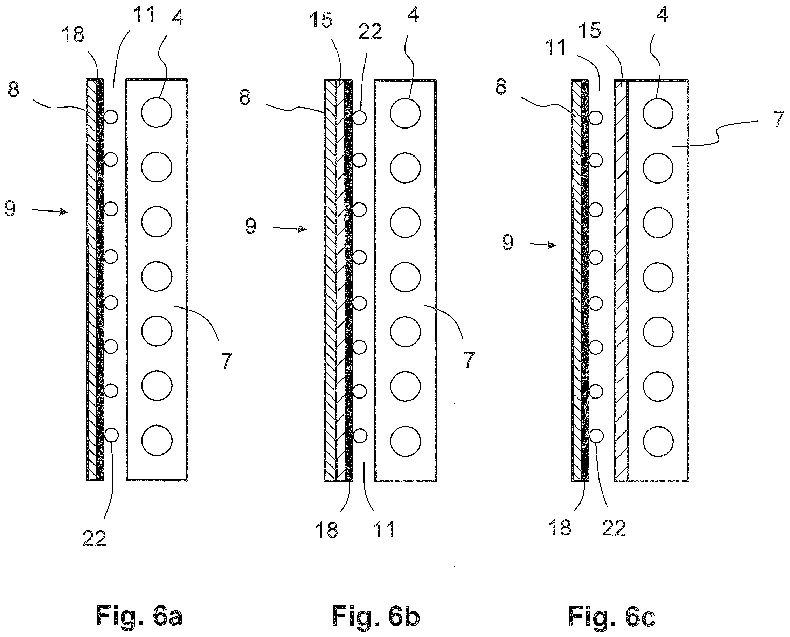

Eine weitere vorteilhafte Möglichkeit, wie eine oder mehrere Außenwände 8 der Haushaltsgeschirrspülmaschine erwärmt werden können, zeigen die Figuren 5 und 6.

Anstelle des beschriebenen Heizelements 13 ist hier zwischen der Außenwand 8 und dem Flüssigkeitstank 7 ein Wärmetauscher 22 angeordnet, der von dem Wärmeträger 3 der Wärmepumpenanordnung durchströmt wird, wenn die Wärmepumpenanordnung in Betrieb ist. Der Wärmetauscher 22 ist vorzugsweise derart in die Wärmepumpenanordnung integriert, dass der Wärmeträger 3 nach Passieren des Verflüssigers 6 in den Wärmetauscher 22 eintritt. Der Wärmeträger 3 hat hierbei noch eine Temperatur, die ausreicht, um die Außenwand 8 auf eine Temperatur zu erwärmen, die eine Kondensation von Wasserdampf verhindert oder ein Verdampfen von flüssigem Wasser auf der Außenseite 9 der entsprechenden Außenwand 8 bewirkt.

Vorzugsweise ist der Wärmetauscher 22 als Rohrschlange ausgebildet, die direkt mit der Innenseite 17 einer oder mehrerer Außenwände 8 der Haushaltsgeschirrspülmaschine verbunden ist.

Ebenso ist es denkbar, dass zwischen dem Wärmetauscher 22 und der Außenwand 8 ein flächiger wärmeleitender Abschnitt, vorzugsweise in Form eines flächigen Metallabschnitts 18, vorhanden ist. Der Abschnitt wirkt als Wärmeleiter, der die vom Wärmetauscher 22 abgegebene Wärme möglichst flächig auf die benachbarte Außenwand 8 überträgt, um eine gleichmäßige Erwärmung der Außenwand 8 zu bewirken.

Wie den Figuren 6a bis 6c zu entnehmen ist, kann auch im Falle des Einsatzes eines entsprechenden Wärmetauschers 22 eine Isolationsschicht 15 vorhanden sein, die zwischen dem Wärmetauscher 22 und der Außenwand 8 (Figur 6b) oder zwischen dem Wärmetauscher 22 und dem Flüssigkeitstank 7 (Figur 6c) vorhanden sein kann. Selbstverständlich ist es aus möglich, auf die entsprechende Isolationsschicht 15 zu verzichten (Figur 6a).

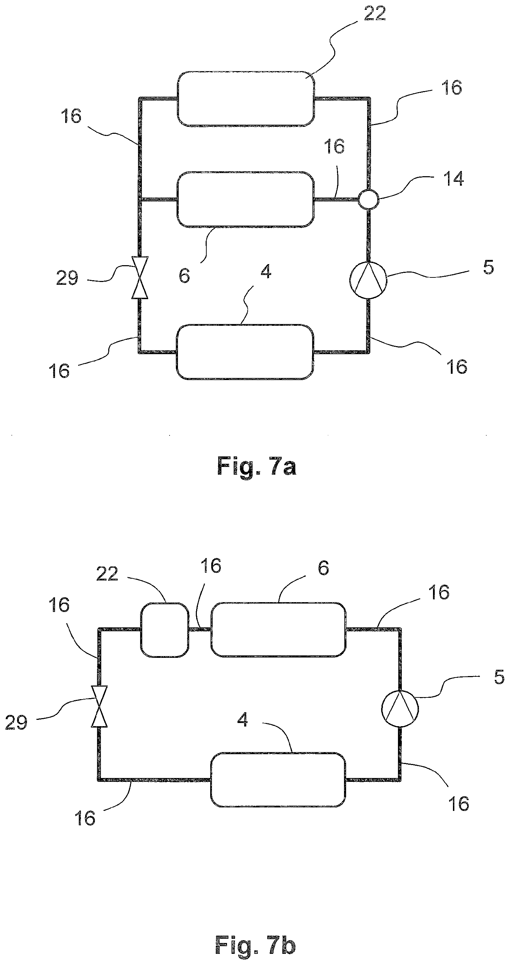

Schließlich zeigen die Figuren 7a und 7b zwei verschiedene Möglichkeiten, wie der Wärmetauscher 22 in die Wärmepumpenanordnung strömungstechnisch integriert werden kann.

Figur 7a zeigt eine Lösung, in der der Wärmetauscher 22, der der Erwärmung einer oder mehrerer Außenwände 8 dient, mit dem Verflüssiger 6 strömungstechnisch parallel geschaltet ist. Der Wärmeträger 3 wird also nach Passieren des Verdichters 5 teilweise dem Verflüssiger 6 und teilweise dem Wärmetauscher 22 zugeführt. Das Verhältnis der jeweiligen Volumenströme lässt sich vorzugsweise mit Hilfe eines Ventils 14 regulieren, das wiederum mit der Steuer- und/oder Regeleinrichtung 12 in Verbindung stehen sollte. Insbesondere ist es von Vorteil, wenn das Ventil 14 ausgebildet ist, den Wärmeträger 3 entweder nur zum Verflüssiger 6 oder nur zum Wärmetauscher 22 zu leiten. In sämtlichen beschriebenen Fällen kann darauf Einfluss genommen werden, ob die Wärme des Wärmeträgers 3 überwiegend oder ausschließlich zur Erwärmung der Spülflotte 28 oder überwiegend oder ausschließlich zur Erwärmung einer oder mehrerer Außenwände 8 der Haushaltsgeschirrspülmaschine dient.

Eine alternative Integration des Wärmetauschers 22 zeigt Figur 7b. Im Gegensatz zu der in Figur 7a gezeigten Lösung sind hier der Wärmetauscher 22 und der Verflüssiger 6 strömungstechnisch in Reihe geschaltet, d.h., der Wärmeträger 3 durchströmt zunächst den Verflüssiger 6 und anschließend den Wärmetauscher 22, bevor er in den Bereich des Expansionsorgans 29 gelangt. Der Massenstrom des Wärmeträgers 3 ist in diesem Fall an jeder Stelle der Wärmepumpenanordnung zu jeder Zeit konstant. Eine derartige Ausführung bewirkt, dass der Wärmeträger 3 nach Passieren des Verflüssigers 6 weiter abgekühlt wird (sogenannte Unterkühlung). Hierdurch wird die Effektivität der Wärmepumpenanordnung erhöht.

Im Übrigen ist die Erfindung nicht auf das dargestellte Ausführungsbeispiel beschränkt. Vielmehr sind sämtliche Kombinationen der beschriebenen Einzelmerkmale, wie sie in den Ansprüchen, der Beschreibung sowie den Figuren gezeigt oder beschrieben sind und soweit eine entsprechende Kombination technisch möglich bzw. sinnvoll erscheint, Gegenstand der Erfindung.

### Bezugszeichenliste

- 1: Aufnahmeraum
- 2: Spülgut
- 3: Wärmeträger
- 4: Verdampfer
- 5: Verdichter
- 6: Verflüssiger
- 7: Flüssigkeitstank
- 8: Außenwand der Haushaltsgeschirrspülmaschine
- 9: Außenseite der Außenwand
- 10: Lüfter
- 11: Spalt
- 12: Steuer- und/oder Regeleinrichtung
- 13: Heizelement
- 14: Ventil
- 15: Isolationsschicht
- 16: Wärmeträgerleitung
- 17: Innenseite der Außenwand
- 18: flächiger Metallabschnitt
- 19: Temperatursensor
- 20: Feuchtigkeitssensor
- 21: Flüssigkeitssensor
- 22: Wärmetauscher
- 23: Pumpensumpf
- 24: Spülflottenleitung
- 25: Umwälzpumpe
- 26: Spülflottenpumpe
- 27: Sprüharm
- 28: Spülflotte
- 29: Expansionsorgan
- 30: Geschirrkorb
- 31: Frischwasser

## Patentansprüche

1. Haushaltsgeschirrspülmaschine mit einem Aufnahmeraum (1) zur Aufnahme von Spülgut (2) und einer Wärmepumpenanordnung, die bei ihrem Betrieb von einem Wärmeträger (3) durchströmt wird, wobei die Wärmepumpenanordnung zumindest einen Verdampfer (4) zum Verdampfen des Wärmeträgers (3), einen Verdichter (5) zum Verdichten des vom Verdampfer (4) kommenden Wärmeträgers (3) und einen Verflüssiger (6) zum Kondensieren des vom Verdichter (5) kommenden Wärmeträgers (3) umfasst, wobei der Verdampfer (4) mit einem Flüssigkeitstank (7) der Haushaltsgeschirrspülmaschine thermisch gekoppelt, insbesondere zumindest abschnittsweise innerhalb eines Flüssigkeitstanks (7) der Haushaltsgeschirrspülmaschine angeordnet, ist, welcher wenigstens teilweise zwischen dem Aufnahmeraum (1) und einer die Haushaltsgeschirrspülmaschine nach außen hin begrenzenden Außenwand (8) der Haushaltsgeschirrspülmaschine angeordnet ist, **dadurch gekennzeichnet, dass** die Haushaltsgeschirrspülmaschine wenigstens ein Mittel aufweist, mit dessen Hilfe die genannte Außenwand (8) zumindest abschnittsweise erwärmbar ist, um einer Kondensation von Wasserdampf auf der dem Aufnahmeraum (1) abgewandten Außenseite (9) der Außenwand (8) entgegenzuwirken und/oder auf der Außenseite (9) vorhandenes Kondenswasser zu verdampfen.

2. Haushaltsgeschirrspülmaschine gemäß dem vorangegangenen Anspruch, **dadurch gekennzeichnet, dass** das Mittel einen Lüfter (10) umfasst, mit dessen Hilfe Luft zum Verflüssiger (6) und/oder Verdichter (5) und von dort durch einen zwischen der genannten Außenwand (8) und dem Flüssigkeitstank (7) vorhandenen Hohlraum und/oder in den Bereich der genannten Außenseite (9) der Außenwand (8) förderbar ist.

3. Haushaltsgeschirrspülmaschine gemäß dem vorangegangenen Anspruch, **dadurch gekennzeichnet, dass** der Hohlraum durch einen Spalt (11) zwischen dem Flüssigkeitstank (7) und der genannten Außenwand (8) gebildet ist.

4. Haushaltsgeschirrspülmaschine gemäß Anspruch 2 oder 3, **dadurch gekennzeichnet, dass** die Haushaltsgeschirrspülmaschine eine Steuer- und/oder Regeleinrichtung (12) aufweist, die ausgebildet ist, die Drehzahl des Lüfters (10) auf Basis von Messwerten einer Sensoranordnung der Haushaltsgeschirrspülmaschine und/oder basierend auf Vorgaben eines Spülprogramms zu regulieren.

5. Haushaltsgeschirrspülmaschine gemäß einem der vorangegangenen Ansprüche, **dadurch gekennzeichnet, dass** das Mittel ein Heizelement (13) umfasst, welches derart im Bereich der genannten Außenwand (8) angeordnet ist, dass die Außenwand (8) mit Hilfe des Heizelements (13) erwärmbar ist.

6. Haushaltsgeschirrspülmaschine gemäß dem vorangegangenen Anspruch, **dadurch gekennzeichnet, dass** das Heizelement (13) zwischen dem Flüssigkeitstank (7) und der genannten Außenwand (8) angeordnet ist.

7. Haushaltsgeschirrspülmaschine gemäß Anspruch 5 oder 6, **dadurch gekennzeichnet, dass** die Haushaltsgeschirrspülmaschine eine Steuer- und/oder Regeleinrichtung (12) aufweist, die ausgebildet ist, die Heizleistung des Heizelements (13) auf Basis von Messwerten einer Sensoranordnung der Haushaltsgeschirrspülmaschine und/oder basierend auf Vorgaben eines Spülprogramms zu regulieren.

8. Haushaltsgeschirrspülmaschine gemäß einem der Ansprüche 5 bis 7, **dadurch gekennzeichnet, dass** zwischen dem Flüssigkeitstank (7) und der genannten Außenwand (8) ein, vorzugsweise parallel zum Heizelement (13) verlaufender, Spalt (11) angeordnet ist und/oder dass zwischen dem Flüssigkeitstank (7) und der Außenwand (8) eine, vorzugsweise parallel zum Heizelement (13) verlaufende, Isolationsschicht (15) angeordnet ist.

9. Haushaltsgeschirrspülmaschine gemäß einem der vorangegangenen Ansprüche, **dadurch gekennzeichnet, dass** das Mittel einen beim Betrieb der Wärmepumpenanordnung vom Wärmeträger (3) durchströmten Wärmetauscher (22), vorzugsweise einen Röhrenwärmetauscher, umfasst, wobei der Wärmetauscher (22) in Strömungsrichtung des Wärmeträgers (3) gesehen zwischen dem Verdichter (5) und einem Expansionsorgan (29) der Wärmepumpenanordnung angeordnet ist, so dass der vom Verdichter (5) kommende Wärmeträger (3) beim Betrieb der Wärmepumpenanordnung durch den Wärmetauscher (22) strömt, bevor er zum Expansionsorgan (29) gelangt.

10. Haushaltsgeschirrspülmaschine gemäß dem vorangegangenen Anspruch, **dadurch gekennzeichnet, dass** der Wärmetauscher (22) mit dem Verflüssiger (6) strömungstechnisch in Reihe geschaltet ist, so dass der Massenstrom des Wärmeträgers (3) innerhalb der gesamten Wärmepumpenanordnung stets konstant ist, oder dass der Wärmetauscher (22) mit dem Verflüssiger (6) strömungstechnisch parallel geschaltet ist.

11. Haushaltsgeschirrspülmaschine gemäß Anspruch 9 oder 10, **dadurch gekennzeichnet, dass** der Wärmetauscher (22) mit einer Innenseite (17) der genannten Außenwand (8) direkt und/oder über einen Wärmeleiter, vorzugsweise einen flächigen Metallabschnitt (18), in Kontakt steht.

12. Haushaltsgeschirrspülmaschine gemäß einem der Ansprüche 9 bis 11, **dadurch gekennzeichnet, dass** zwischen dem Flüssigkeitstank (7) und dem Wärmetauscher (22) und/oder zwischen der Außenwand (8) der Haushaltsgeschirrspülmaschine und dem Wärmetauscher (22) eine Isolationsschicht (15) angeordnet ist.

13. Haushaltsgeschirrspülmaschine gemäß einem der Ansprüche 4 bis 12, **dadurch gekennzeichnet, dass** die Sensoranordnung im Bereich der genannten Außenseite (9) der Außenwand (8) angeordnet ist und einen Temperatursensor (19) zur Überwachung der Temperatur der Außenseite (9) und/oder der Luft im Bereich der Außenseite (9) und/oder einen Feuchtigkeitssensor (20) zur Überwachung der relativen und/oder absoluten Feuchtigkeit im Bereich der Außenseite (9) und/oder einen Flüssigkeitssensor (21) zur Detektion von Flüssigkeit auf der Außenwand (8) umfasst.

14. Verfahren zum Betreiben einer Haushaltsgeschirrspülmaschine mit einem Aufnahmeraum (1) zur Aufnahme von Spülgut (2) und einer Wärmepumpenanordnung, die bei ihrem Betrieb von einem Wärmeträger (3) durchströmt wird, und die unter anderem einen Verdampfer (4), einen Verdichter (5) und einen Verflüssiger (6) umfasst, wobei der Wärmeträger (3) beim Betrieb der Wärmepumpenanordnung mit Hilfe des Verdampfers (4) verdampft wird, wobei der vom Verdampfer (4) kommende Wärmeträger (3) mit Hilfe des Verdichters (5) verdichtet wird, und wobei der vom Verdichter (5) kommende Wärmeträger (3) mit Hilfe des Verflüssigers (6) verflüssigt wird, wobei der Verdampfer (4) mit einem Flüssigkeitstank (7) der Haushaltsgeschirrspülmaschine thermisch gekoppelt, insbesondere zumindest abschnittsweise innerhalb eines Flüssigkeitstanks (7) der Haushaltsgeschirrspülmaschine angeordnet, ist, welcher wenigstens teilweise zwischen dem Aufnahmeraum (1) und einer die Haushaltsgeschirrspülmaschine nach außen hin begrenzenden Außenwand (8) der Haushaltsgeschirrspülmaschine angeordnet ist, **dadurch gekennzeichnet, dass** die genannte Außenwand (8) während eines Spülprogramms zumindest abschnittsweise und wenigstens zeitweise erwärmt wird, um einer Kondensation von Wasserdampf auf einer dem Aufnahmeraum (1) abgewandten Außenseite (9) der Außenwand (8) entgegenzuwirken und/oder auf der Außenseite (9) vorhandenes Kondenswasser zu verdampfen.

15. Verfahren gemäß dem vorangegangenen Anspruch, **dadurch gekennzeichnet, dass** die genannte Außenwand (8) mit Hilfe eines Lüfters (10), eines elektrischen Heizelements (13) und/oder einen Wärmetauscher (22) erwärmt wird, durch den während des Betriebs der Wärmepumpenanordnung der Wärmeträger (3) strömt.

## Claims

1. Household dishwasher with a receiving compartment (1) for receiving items to be washed (2) and a heat pump arrangement, through which a heat transfer medium (3) flows during operation thereof, wherein the heat pump arrangement comprises at least one evaporator (4) for evaporating the heat transfer medium (3), a compressor (5) for compressing the heat transfer medium (3) coming from the evaporator (4) and a condenser (6) for condensing the heat transfer medium (3) coming from the compressor (5), wherein the evaporator (4) is thermally coupled to a liquid tank (7) of the household dishwasher, in particular is arranged within a liquid tank (7) of the household dishwasher, at least in sections, which liquid tank (7) is arranged at least partially between the receiving compartment (1) and an outer wall (8) of the household dishwasher that delimits the household dishwasher to the outside, **characterised in that** the household dishwasher has at least one means, with the aid of which said outer wall (8) can be heated at least in sections, in order to counteract a condensation of water vapour on the outer side (9) of the outer wall (8) facing away from the receiving compartment (1) and/or to evaporate condensate present on the outer side (9).

2. Household dishwasher according to the preceding claim, **characterised in that** the means comprises a fan (10), with the aid of which air can be conveyed to the condenser (6) and/or compressor (5), and from there through a cavity present between said outer wall (8) and the liquid tank (7) and/or into the region of said outer side (9) of the outer wall (8).

3. Household dishwasher according to the preceding claim, **characterised in that** the cavity is formed by a gap (11) between the liquid tank (7) and said outer wall (8).

4. Household dishwasher according to claim 2 or 3, **characterised in that** the household dishwasher has a control and/or regulation facility (12), which is embodied to regulate the rotary speed of the fan (10) on the basis of measurement values of a sensor arrangement of the household dishwasher and/or based on requirements of a washing program.

5. Household dishwasher according to one of the preceding claims, **characterised in that** the means comprises a heating element (13), which is arranged in the region of said outer wall (8) in such a way that the outer wall (8) can be heated with the aid of the heating element (13).

6. Household dishwasher according to the preceding claim, **characterised in that** the heating element (13) is arranged between the liquid tank (7) and said outer wall (8).

7. Household dishwasher according to claim 5 or 6, **characterised in that** the household dishwasher has a control and/or regulation facility (12), which is embodied to regulate the heating output of the heating element (13) on the basis of measurement values of a sensor arrangement of the household dishwasher and/or based on requirements of a washing program.

8. Household dishwasher according to one of claims 5 to 7, **characterised in that** a gap (11), preferably running in parallel with the heating element (13), is arranged between the liquid tank (7) and said outer wall (8) and/or an insulating layer (15), preferably running in parallel with the heating element (13), is arranged between the liquid tank (7) and the outer wall (8).

9. Household dishwasher according to one of the preceding claims, **characterised in that** the means comprises a heat exchanger (22), preferably a shell and tube heat exchanger, through which the heat transfer medium (3) flows during operation of the heat pump arrangement, wherein the heat exchanger (22) is arranged between the compressor (5) and an expansion element (29) of the heat pump arrangement when viewed in the direction of flow of the heat transfer medium (3), so that the heat transfer medium (3) coming from the compressor (5) flows through the heat exchanger (22) during operation of the heat pump arrangement, before it reaches the expansion element (29).

10. Household dishwasher according to the preceding claim, **characterised in that** the heat exchanger (22) is connected in series with the condenser (6) in terms of flow, so that the mass flow rate of the heat transfer medium (3) is always constant within the overall heat pump arrangement, or that the heat exchanger (22) is connected in parallel with the condenser (6) in terms of flow.

11. Household dishwasher according to claim 9 or 10, **characterised in that** the heat exchanger (22) is in contact, directly and/or via a heat conductor, preferably a flat metal section (18), with an inner side (17) of said outer wall (8).

12. Household dishwasher according to one of claims 9 to 11, **characterised in that** an insulating layer (15) is arranged between the liquid tank (7) and the heat exchanger (22) and/or between the outer wall (8) of the household dishwasher and the heat exchanger (22).

13. Household dishwasher according to one of claims 4 to 12, **characterised in that** the sensor arrangement is arranged in the region of said outer side (9) of the outer wall (8) and comprises a temperature sensor (19) for monitoring the temperature of the outer side (9) and/or the air in the region of the outer side (9) and/or a humidity sensor (20) for monitoring the relatively and/or absolute humidity in the region of the outer side (9) and/or a liquid sensor (21) for detecting liquid on the outer wall (8).

14. Method for operating a household dishwasher with a receiving compartment (1) for receiving items to be washed (2) and a heat pump arrangement, through which a heat transfer medium (3) flows during operation thereof, and which inter alia comprises an evaporator (4), a compressor (5) and a condenser (6), wherein the heat transfer medium (3) is evaporated with the aid of the evaporator (4) during operation of the heat pump arrangement, wherein the heat transfer medium (3) coming from the evaporator (4) is compressed with the aid of the compressor (5), and wherein the heat transfer medium (3) coming from the compressor (5) is condensed with the aid of the condenser (6), wherein the evaporator (4) is thermally coupled to a liquid tank (7) of the household dishwasher, in particular is arranged within a liquid tank (7) of the household dishwasher, at least in sections, which liquid tank (7) is arranged at least partially between the receiving compartment (1) and an outer wall (8) of the household dishwasher that delimits the household dishwasher to the outside, **characterised in that** said outer wall (8) is heated, at least in sections and at least for a time, in order to counteract a condensation of water vapour on an outer side (9) of the outer wall (8) facing away from the receiving compartment (1) and/or to evaporate condensate present on the outer side (9).

15. Method according to the preceding claim, **characterised in that** said outer wall (8) is heated with the aid of a fan (10), an electrical heating element (13) and/or a heat exchanger (22), through which the heat transfer medium (3) flows during operation of the heat pump arrangement.

## Revendications

1. Lave-vaisselle domestique avec un espace de logement (1) permettant le logement de vaisselle (2) et un équipement de pompe à chaleur qui est traversé par un agent caloporteur (3) lors de son fonctionnement, dans lequel l'équipement de pompe à chaleur comprend au moins un évaporateur (4) permettant l'évaporation de l'agent caloporteur (3), un compresseur (5) permettant la compression de l'agent caloporteur (3) venant de l'évaporateur (4) et un condenseur (6) permettant la condensation de l'agent caloporteur (3) venant du compresseur (5), dans lequel l'évaporateur (4) est couplé thermiquement à une cuve de liquide (7) du lave-vaisselle domestique, en particulier est disposé au moins par sections à l'intérieur d'une cuve de liquide (7) du lave-vaisselle domestique, qui est disposée au moins partiellement entre l'espace de logement (1) et une paroi externe (8), délimitant le lave-vaisselle domestique vers l'extérieur, du lave-vaisselle domestique, **caractérisé en ce que** le lave-vaisselle domestique présente au moins un moyen à l'aide duquel ladite paroi externe (8) peut être réchauffée au moins par sections pour contrecarrer une condensation de vapeur d'eau sur la face externe (9), opposée à l'espace de logement (1), de la paroi externe (8) et/ou évaporer de l'eau de condensation présente sur la face externe (9).

2. Lave-vaisselle domestique selon la revendication précédente, **caractérisé en ce que** le moyen comprend un aérateur (10) à l'aide duquel de l'air peut être acheminé vers le condenseur (6) et/ou le compresseur (5) et de là à travers une cavité présente entre ladite paroi externe (8) et la cuve de liquide (7) et/ou dans la zone de ladite face externe (9) de la paroi externe (8).

3. Lave-vaisselle domestique selon la revendication précédente, **caractérisé en ce que** la cavité est formée par le biais d'une fente (11) entre la cuve de liquide (7) et ladite paroi externe (8).

4. Lave-vaisselle domestique selon la revendication 2 ou 3, **caractérisé en ce que** le lave-vaisselle domestique présente un dispositif de commande et/ou de réglage (12) qui est configuré pour réguler le régime de l'aérateur (10) sur la base de valeurs de mesure d'un équipement à capteurs du lave-vaisselle domestique et/ou sur la base d'indications d'un programme de lavage.

5. Lave-vaisselle domestique selon l'une quelconque des revendications précédentes, **caractérisé en ce que** le moyen comprend un élément chauffant (13) qui est disposé dans la zone de ladite paroi externe (8) de telle sorte que la paroi externe (8) peut être réchauffée à l'aide de l'élément chauffant (13).

6. Lave-vaisselle domestique selon la revendication précédente, **caractérisé en ce que** l'élément chauffant (13) est disposé entre la cuve de liquide (7) et ladite paroi externe (8).

7. Lave-vaisselle domestique selon la revendication 5 ou 6, **caractérisé en ce que** le lave-vaisselle domestique présente un dispositif de commande et/ou de réglage (12) qui est configuré pour réguler la puissance de chauffe de l'élément chauffant (13) sur la base de valeurs de mesure d'un équipement à capteurs du lave-vaisselle domestique et/ou sur la base d'indications d'un programme de lavage.

8. Lave-vaisselle domestique selon l'une quelconque des revendications 5 à 7, **caractérisé en ce que**, entre la cuve de liquide (7) et ladite paroi externe (8), une fente (11), de préférence s'étendant parallèlement à l'élément chauffant (13), est disposée et/ou **en ce que**, entre la cuve de liquide (7) et la paroi externe (8), une couche d'isolation (15), s'étendant de préférence parallèlement à l'élément chauffant (13), est disposée.

9. Lave-vaisselle domestique selon l'une quelconque des revendications précédentes, **caractérisé en ce que** le moyen comprend un échangeur de chaleur (22) traversé par l'agent caloporteur (3) lors du fonctionnement de l'équipement de pompe à chaleur, de préférence un échangeur de chaleur tubulaire, dans lequel l'échangeur de chaleur (22) vu dans la direction d'écoulement de l'agent caloporteur (3) est disposé entre le compresseur (5) et un organe de dilatation (29) de l'équipement de pompe à chaleur, de sorte que l'agent caloporteur (3) venant du compresseur (5) s'écoule à travers l'échangeur de chaleur (22) lors du fonctionnement de l'équipement de pompe à chaleur avant d'arriver à l'organe de dilatation (29).

10. Lave-vaisselle domestique selon la revendication précédente, **caractérisé en ce que** l'échangeur de chaleur (22) est commuté en série avec le condenseur (6) sur le plan de l'écoulement de sorte que le débit massique de l'échangeur de chaleur (3) est constant à l'intérieur de l'ensemble de l'équipement de pompe à chaleur ou **en ce que** l'échangeur de chaleur (22) est commuté en parallèle avec le condenseur (6) sur le plan de l'écoulement.

11. Lave-vaisselle domestique selon la revendication 9 ou 10, **caractérisé en ce que** l'échangeur de chaleur (22) est en contact avec une face interne (17) de ladite paroi externe (8) directement et/ou par le biais d'un conducteur de chaleur, de préférence une section métallique plate (18).

12. Lave-vaisselle domestique selon l'une quelconque des revendications 9 à 11, **caractérisé en ce que**, entre la cuve de liquide (7) et l'échangeur de chaleur (22) et/ou entre la paroi externe (8) du lave-vaisselle domestique et l'échangeur de chaleur (22) est disposée une couche d'isolation (15).

13. Lave-vaisselle domestique selon l'une quelconque des revendications 4 à 12, **caractérisé en ce que** l'équipement à capteurs est disposé dans la zone de ladite face externe (9) de la paroi externe (8) et comprend un capteur de température (19) permettant la surveillance de la température de la face externe (9) et/ou de l'air dans la zone de la face externe (9) et/ou un capteur d'humidité (20) permettant la surveillance de l'humidité relative et/ou absolue dans la zone de la face externe (9) et/ou un capteur de liquide (21) permettant la détection de liquide sur la paroi externe (8).

14. Procédé permettant le fonctionnement d'un lave-vaisselle domestique avec un espace de logement (1) permettant le logement de vaisselle (2) et un équipement de pompe à chaleur qui est traversé lors de son fonctionnement par un agent caloporteur (3) et qui comprend entre autre un évaporateur (4), un compresseur (5) et un condenseur (6), dans lequel l'agent caloporteur (3) est évaporé lors du fonctionnement de l'équipement de pompe à chaleur à l'aide de l'évaporateur (4), dans lequel l'agent caloporteur (3) venant de l'évaporateur (4) est comprimé à l'aide du compresseur (5), et dans lequel l'agent caloporteur (3) venant du compresseur (5) est condensé à l'aide du condenseur (6), dans lequel l'évaporateur (4) est couplé thermiquement à une cuve de liquide (7) du lave-vaisselle domestique, en particulier est disposé au moins par sections à l'intérieur d'une cuve de liquide (7) du lave-vaisselle domestique, qui est disposée au moins partiellement entre l'espace de logement (1) et une paroi externe (8), délimitant le lave-vaisselle domestique vers l'extérieur, du lave-vaisselle domestique, **caractérisé en ce que** ladite paroi externe (8) est réchauffée pendant un programme de lavage au moins par sections et à tout le moins temporairement pour contrecarrer une condensation de vapeur d'eau sur une face externe (9), opposée à l'espace de logement (1), de la paroi externe (8) et/ou pour évaporer de l'eau de condensation présente sur la face externe (9).

15. Procédé selon la revendication précédente, **caractérisé en ce que** ladite paroi externe (8) est réchauffée à l'aide d'un aérateur (10), d'un élément chauffant électrique (13) et/ou d'un échangeur de chaleur (22) à travers lequel l'agent caloporteur (3) s'écoule pendant le fonctionnement de l'équipement de pompe à chaleur.
